# EUROPÄISCHE PATENTSCHRIFT

(11) **EP 2 230 390 B1**
(45) Veröffentlichungstag und Bekanntmachung des Hinweises auf die Patenterteilung: **02.08.2017**
(21) Anmeldenummer: 10163641.3
(22) Anmeldetag: 22.04.2008
(51) Int. Cl.: F01L 1/34, B60T 13/52, F01L 1/02, F01L 1/053, B60T 17/02, F02B 67/04, F01L 1/344

(54) **Nockenwellenphasensteller und Vakuumpumpe für eine Brennkraftmaschine**
Cam shaft phaser and vacuum pump for a combustion engine
Déphaseur d'arbres à cames et pompe à vide pour un moteur à combustion interne

(30) Priorität: 27.04.2007 DE 102007020431
(43) Veröffentlichungstag der Anmeldung: 22.09.2010
(62) Teilanmeldung aus: 08154933.9
(73) Patentinhaber: Schwäbische Hüttenwerke Automotive GmbH, 73433 Aalen-Wasseralfingen (DE)
(72) Erfinder: Maucher, Franz, 88339 Bad Waldsee (DE); Welte, Claus, 88326 Aulendorf (DE); Bohner, Jürgen, 88339 Bad Waldsee (DE)
(74) Vertreter: Schwabe - Sandmair - Marx

(56) Entgegenhaltungen:
- EP-A- 0 758 047
- EP-A2- 0 446 065
- DE-A1- 3 929 621
- DE-A1- 4 210 580
- DE-A1- 10 260 546
- DE-A1- 19 745 670
- US-A- 4 537 164
- US-A- 4 858 572
- US-A1- 2003 154 938
- US-A1- 2005 028 773
- US-A1- 2005 257 762

## Beschreibung

Die Erfindung betrifft eine Vorrichtung zur Verstellung der Phasenlage einer Nockenwelle einer Brennkraftmaschine und auch eine Brennkraftmaschine mit der montierten Vorrichtung.

Zur Erhöhung von Leistung und Drehmoment sowie zur Reduzierung der Schadstoffemissionen und Kraftstoffverbräuche werden moderne Pkw-Motoren in zunehmendem Maße mit Nockenwellenphasenstellern ausgerüstet, die mit Motoröldruck beaufschlagt werden und mit denen sich der Phasenwinkel einer Einlassnockenwelle oder einer Auslassnockenwelle oder beider Nockenwellen relativ zu einer Motorkurbelwelle verstellen lassen. Üblich ist die Anordnung separater Funktionseinheiten von Nockenwellenphasenstellern und Vakuumpumpen an der Nockenwelle. Derartige Anordnungen bringen wegen der erforderlichen Dichtheit und Kopplung der Funktionseinheiten mit dem jeweiligen Antrieb, gegebenenfalls auch zueinander, und auch im Hinblick auf die Gestaltung der Ölzu- und -abführung einen verhältnismäßig großen Bauaufwand mit sich. Eine direkte Kopplung der Vakuumpumpe mit einer Nockenwelle beschränkt ferner das Drehzahlniveau und die Anordnung der Vakuumpumpe.

Die DE 102 60 546 A1 offenbart die Anordnung einer Vakuumpumpe und eines Nockenwellenphasenstellers koaxial nebeneinander auf der gleichen Drehachse. Ein Rotor des Phasenstellers sitzt verdrehgesichert auf der zu verstellenden Nockenwelle. Der Stator wird von der Kurbelwelle angetrieben. Der Rotor ist verdrehgesichert über eine Kupplung mit der Vakuumpumpe verbunden. Die Vakuumpumpe weist ein Gehäuse auf, das an einem Zylinderkopf der Brennkraftmaschine angeflanscht ist, und eine Antriebswelle, die den Zylinderkopf durchragt und mittels der Kupplung verdrehgesichert mit dem Rotor des Phasenstellers verbunden ist. Die Vakuumpumpe wird durch eine Zentralbohrung ihrer Antriebswelle durch den Zylinderkopf hindurch mit Schmieröl versorgt.

Die DE 39 29 621 A1 betrifft eine Vorrichtung zur relativen Drehwinkelverstellung einer Welle zu einem Antriebsrad, insbesondere eine Nockenwelle einer Brennkraftmaschine, mit einem hydraulischen Linearmotor als Betätigungsanordnung für eine zwischen Antriebsrad und Welle wirksamen Verstellanordnung. Die DE 197 45 670 A1 betrifft eine Vorrichtung zum Verändern der Steuerzeiten von Gaswechselventilen einer Brennkraftmaschine. Die Vorrichtung ist im Bereich des Zylinderkopfs der Verbrennungskraftmaschine an einer Nockenwelle angeordnet. Aus der US 4 537 164 A ist eine Vorrichtung zum Aktivieren und/oder Verstellen von Ventilen bekannt, mit einem Druckspeicher für eine schnelle Ab- und Zuschaltung von Ventilen. Die EP 0 758 047 A1 betrifft ein Verfahren zum Betreiben einer hydraulisch gesteuerten oder geregelten Nockenwellen-Verstellvorrichtung für Brennkraftmaschinen. Aus der US 4 858 572 A ist eine Vorrichtung zum Einstellen einer Winkelphasendifferenz zwischen zwei Elementen zum Beispiel einer Nockenwelle und einer Kurbelwelle eines Verbrennungsmotors bekannt. Die US 2005/028773 A1 betrifft eine Vorrichtung zum variablen Betätigen von Ventilen einer Verbrennungskraftmaschine. Aus der DE 102 60 546 A1 ist eine Brennkraftmaschine mit einer Vorrichtung zur hydraulischen Drehwinkelverstellung der Nockenwelle gegenüber der Kurbelwelle und einer Vakuumpumpe für einen Servoverbraucher bekannt. Der Phasensteller ist in einem Zylinderkopf angeordnet und eine Antriebswelle der Vakuumpumpe ragt in den Zylinderkopf hinein. Die DE 42 10 580 A1 betrifft eine Vorrichtung zur Winkelverstellung einer Nockenwelle einer Brennkraftmaschine. Aus der EP 0 446 065 A2 ist ein Verfahren zum Kontrollieren einer Verbrennungskraftmaschine bekannt und die US 2003/0154938 A1 betrifft eine Mehrzylinder-Verbrennungskraftmaschine mit einer elektrisch geregelten hydraulischen Vorrichtung zum Steuern von variablen Ventileinstellungen. Die US 2005/0257762 A1 betrifft ein variables Ventilzeitkontrollsystem für eine Verbrennungsmaschine. Das System umfasst einen Phasenversteller, der zur Erzeugung des Drucks im Fluid eine elektrische Pumpe aufweist. Gleichzeitig kann der Phasensteller auch von einer vom Motor angetriebenen Pumpe mit Druckfluid versorgt werden, wodurch der Verbrauch an elektrischer Energie für die Primärpumpe erheblich reduziert werden kann.

Es ist eine Aufgabe der Erfindung, einen Nockenwellenphasensteller für eine Brennkraftmaschine raum- und gewichtssparend und einfach montierbar anzuordnen.

Die Erfindung geht von einer Vorrichtung aus, die einen Phasensteller für eine Verstellung der Phasenlage einer Nockenwelle einer Brennkraftmaschine umfasst. Der Phasensteller kann für die Verstellung der Phasenlage einer weiteren Nockenwelle oder gegebenenfalls mehrerer weiterer Nockenwellen der Brennkraftmaschine vorgesehen sein. Die Vorrichtung kann auch einen weiteren oder mehrere weitere Phasensteller für die Verstellung der Phasenlage einer weiteren Nockenwelle oder der Phasenlage mehrerer weiterer Nockenwellen umfassen.

Die Vorrichtung umfasst ferner ein Anbaugehäuse für den Phasensteller. Das Anbaugehäuse ist an der Brennkraftmaschine montierbar oder bereits montiert, d.h. die Erfindung hat die Vorrichtung als solche und im montierten Zustand zum Gegenstand. Das Anbaugehäuse kann einteilig oder mehrteilig sein. In bevorzugt mehrteiligen Ausführungen kann es beispielsweise ein Anbaugehäusehauptteil und einen oder mehrere Gehäusedeckel aufweisen.

Nach der Erfindung bildet das Anbaugehäuse für den Phasensteller ein Gehäuse oder zumindest einen Gehäusedeckel und erfüllt für den Phasensteller wenigstens eine Gehäusefunktion. So kann das Anbaugehäuse insbesondere wenigstens eine Komponente des Phasenstellers oder eines Antriebs für den Phasensteller lagern. Es kann eine oder es können mehrere Leitungen für ein Druckfluid, elektrische Energie oder Signale sich im Anbaugehäuse oder außen an dem Anbaugehäuse erstrecken. Das Anbaugehäuse kann einen Aufnahmeraum für ein Steuermittel, beispielsweise ein Steuerventil oder ein elektrisches Steuermittel, gegebenenfalls auch einen elektromotorischen Aktuator für den Phasensteller aufweisen.

Der Phasensteller wird mittels des Anbaugehäuses zu einer Funktionseinheit vereint. In dem Maße, in dem das Anbaugehäuse Funktionen für den Phasensteller übernimmt, wird die Brennkraftmaschine als solche von den betreffenden Funktionen entlastet. Beispielsweise kann ein Strukturteil des Anbaugehäuses gleichzeitig auch ein Strukturteil für den Phasensteller bilden. Dies trägt zur Reduzierung des Gewichts und Bauraumbedarfs des Phasenstellers, ferner zur Reduzierung der Zahl der im Zusammenhang mit dem Phasensteller zu montierenden Teile, bei. Desweiteren wird die Schnittstelle zwischen Brennkraftmaschine einerseits und Phasensteller andererseits vereinfacht.

Der Phasensteller weist in bevorzugten Ausführungen einen ersten Rotor und einen weiteren, zweiten Rotor auf. Der erste Rotor wird im Betrieb der Brennkraftmaschine mit einer von der Drehzahl einer Kurbelwelle der Brennkraftmaschine abhängigen Drehzahl angetrieben. Der zweite Rotor treibt die bezüglich der Phasenlage einzustellende Nockenwelle an. Der zweite Rotor wird in Abhängigkeit vom ersten Rotor angetrieben. Die Drehwinkelposition, die der zweite Rotor während der Drehbewegung relativ zum ersten Rotor einnimmt, d.h. die Phasenlage, ist über einen bestimmten Drehwinkelverstellbereich verstellbar. Der zweite Rotor wird vorzugsweise über den ersten Rotor angetrieben. Der erste Rotor nimmt den zweiten Rotor in bevorzugter Ausführung bei seiner Drehbewegung mit und ist hierfür entsprechend mit dem zweiten Rotor gekoppelt. Die Kopplung ist derart, dass der durch die Mitnahme erzeugten Drehbewegung die relative Verstelldrehbewegung überlagerbar ist. Die Kopplung ist vorzugsweise eine fluidisch-mechanische. Grundsätzlich könnte die Phasenlage des zweiten Rotors jedoch auch elektromagnetisch verstellt und die Verstellung der Phasenlage elektronisch gesteuert werden. Auf eine mechanische Kopplung könnte in derartigen Ausführungen gänzlich verzichtet werden. Die Rotoren können insbesondere zueinander innenachsig und vorzugsweise um die gleiche Drehachse drehbar angeordnet sein. Eine außenachsige Anordnung mit vorzugsweise parallelen Drehachsen ist jedoch ebenfalls denkbar. Grundsätzlich könnte der Phasensteller auch als eigenständiger Motor, beispielsweise Elektromotor, gebildet sein und der erste Rotor durch einen relativ zum Anbaugehäuse nicht drehbaren Stator ersetzt werden. Der zweite Rotor würde in derartigen Ausführungen relativ zu dem Stator mit der von der Drehzahl der Kurbelwelle abhängigen Drehzahl angetrieben und die Drehverstellbewegung würde dieser Grunddrehzahl zwecks Einstellung der Phasenlage überlagert werden.

In bevorzugten Ausführungen lagert das Anbaugehäuse wenigstens einen der Rotoren, vorzugsweise beide Rotoren, drehbar. Es kann den ersten oder den zweiten Rotor direkt drehbar lagern, indem es mit dem betreffenden Rotor oder einem drehsteif mit dem Rotor verbundenen Lagerelement ein Drehgelenk bildet. Alternativ kann der erste oder der zweite Rotor auch indirekt erst über ein Zwischenglied drehbar am Anbaugehäuse abgestützt sein, wobei der betreffende Rotor mit dem Zwischenglied ein Drehgelenk und das Zwischenglied mit dem Anbaugehäuse ein weiteres Drehgelenk bilden. Der erste oder der zweite Rotor kann oder können auch über mehrere Zwischenglieder und entsprechend mehrere Gelenke drehbar vom Anbaugehäuse gelagert werden. Insbesondere kann einer der Rotoren für den anderen das wenigstens einen Zwischenglied bilden.

Das Wort "oder" wird hier und auch sonst stets im Sinne von "und/oder" gebraucht, umfasst also jeweils die Bedeutung von "entweder .... oder" und auch die Bedeutung von "sowohl als auch", sofern sich aus dem jeweiligen Zusammenhang nicht zwangsläufig nur ein entweder in die eine oder die andere Richtung eingeschränkter Bedeutungsinhalt ergeben kann.

Was das Merkmal der Drehlagerung anbetrifft, kann zusammengefasst entweder nur der erste Rotor oder nur der zweite Rotor oder sowohl der erste Rotor als auch der zweite Rotor vom Anbaugehäuse direkt oder indirekt drehbar gelagert werden, was auch den Fall einschließt, dass einer der Rotoren direkt und der andere indirekt über ein weiteres Drehgelenk am Anbaugehäuse abgestützt ist. Als direkte Drehlagerung werden Ausführungen verstanden, in denen eine der Drehlagerung dienende Nabe vom jeweiligen Rotor in einem Stück gebildet wird und auch Ausführungen, in denen der jeweilige Rotor einerseits und eine das Drehgelenk mit dem Anbaugehäuse bildende Welle andererseits separat voneinander geformt und verdrehgesichert miteinander gefügt sind. Falls der Phasensteller fluidisch verstellbar ist, kann der zweite Rotor vorteilhafterweise auf einer separat gefertigten Fluidverteilerwelle verdrehgesichert befestigt sein, die mit dem Anbaugehäuse das einzige Drehgelenk für den zweiten Rotor bildet oder über ein oder mehrere weitere Drehgelenke am Anbaugehäuse drehbar abgestützt ist.

Weist die Brennkraftmaschine wenigstens zwei Nockenwellen auf, entspricht es bevorzugten Ausführungen, wenn einer der Rotoren mit einer der Nockenwellen verdrehgesichert verbindbar ist. Der andere Rotor kann mit der anderen Nockenwelle oder einer der anderen Nockenwellen ebenfalls verdrehgesichert verbindbar sein. Bevorzugter ist jedoch nur einer der Rotoren mit einer der Nockenwellen verdrehgesichert verbindbar, während der andere Rotor mit der anderen Nockenwelle oder einer der anderen Nockenwellen mittels Getriebeglieder gekoppelt wird. In einer ersten Variante ist der erste Rotor mit einer der Nockenwellen verdrehgesichert verbindbar, und der zweite Rotor treibt auf die andere Nockenwelle oder eine der gegebenenfalls mehreren anderen Nockenwellen ab, nämlich auf die bezüglich der Phasenlage zu verstellenden Nockenwelle. In einer zweiten Variante ist der zweite Rotor verdrehgesichert mit der zu verstellenden Nockenwelle verbunden und der erste Rotor im Drehwinkelbereich der Verstellbarkeit relativ zu dieser Nockenwelle drehbar. Derartige Ausführungen sind insbesondere dann von Vorteil, wenn die Vorrichtung einen weiteren Phasensteller zur Verstellung der Phasenlage der zweiten Nockenwelle oder einer von mehreren weiteren Nockenwellen umfasst. Bei dem weiteren Phasensteller können hinsichtlich der Verbindung mit der weiteren Nockenwelle vorteilhafterweise die gleichen Verhältnisse wie bei dem ersten Phasensteller herrschen. Der weitere Phasensteller weist vorteilhafterweise eines oder mehrere der zum ersten Phasensteller offenbarten Merkmale auf. Er kann insbesondere gemeinsam mit diesem in oder an dem Anbaugehäuse angeordnet sein.

Von Vorteil ist, wenn das Anbaugehäuse den ersten oder den zweiten Rotor direkt oder über wenigstens ein Zwischenglied in einer Position und Ausrichtung lagert, in der dieser Rotor bei Montage des Anbaugehäuses verdrehgesichert an oder auf der Nockenwelle montierbar ist. Für die Montage dieses Rotors und vorzugsweise des gesamten Phasenstellers genügt es in derartigen Ausführungen, das Anbaugehäuse zu greifen und einschließlich des betreffenden Rotors oder vorzugsweise gesamten Phasenstellers an der Brennkraftmaschine zu positionieren und zu montieren.

Der erste oder zweite Rotor ist mit der Nockenwelle vorzugsweise mittels Form- oder Reibschlussverbindung verbindbar, besonders bevorzugt mittels einer Pressverbindung. Für die Pressverbindung ist es günstig, wenn der Rotor oder ein mit dem Rotor verdrehgesichert verbundenes Montageteil eine relativ zur Drehachse der Nockenwelle geneigte Schrägfläche und die Nockenwelle eine entsprechende Gegenfläche aufweisen, die im verbundenen Zustand mit Presssitz gegeneinander gepresst sind. Die Schrägflächen der Nockenwelle und des Rotors oder Montageteils können insbesondere als Außen- und Innenkonus gebildet sein und mittels einer längs der Drehachse der Nockenwelle eingeleiteten Kraft gegeneinander gepresst werden.

Obgleich in bevorzugten Ausführungen wenigstens, vorzugsweise genau, einer der Rotoren mit der gegebenenfalls nur einen einzigen Nockenwelle oder einer von mehreren Nockenwellen der Brennkraftmaschine verdrehgesichert verbunden ist, ist auch denkbar, dass keiner der Rotoren verdrehgesichert mit der gegebenenfalls einen einzigen oder einer der mehreren Nockenwellen verdrehgesichert verbindbar ist. So sind durchaus Ausführungen möglich, in denen der erste Rotor nicht über die Nockenwelle oder der bevorzugt mehreren Nockenwellen drehangetrieben wird, sondern über Getriebeglieder direkt von der Kurbelwelle und auch der zweite Rotor über Getriebeglieder auf die zu verstellende Nockenwelle abtreibt. Desweiteren kann bei mehreren Nockenwellen der erste Rotor auch von einer der Nockenwellen über Getriebeglieder angetrieben werden und der zweite Rotor über Getriebeglieder auf die zu verstellende Nockenwelle abtreiben.

Das Anbaugehäuse kann mit Vorteil der Drehlagerung eines Getrieberads, der Aufnahme solch eines Getrieberads oder der Aufnahme oder Abstützung eines anderen Getriebeglieds, beispielsweise eines Zahnriemens, eines einfachen Riemens oder einer Kette dienen. Bei dem drehbar gelagerten oder anderweitig abgestützten oder aufgenommenen Getriebeglied kann es sich insbesondere um ein Abtriebsrad auf die Vakuumpumpe oder gegebenenfalls ein Abtriebsrad von der Vakuumpumpe auf den Phasensteller, ein Abtriebsrad auf eine weitere Nockenwelle der Brennkraftmaschine oder ein Antriebsrad für den Drehantrieb des ersten Rotors handeln. Es kann auch die weitere Nockenwelle angetrieben und von dieser auf den ersten Rotor des Phasenstellers abgetrieben werden. Je mehr der für den Antrieb auf oder den Abtrieb vom Phasensteller erforderlichen Getriebeglieder von dem Anbaugehäuse drehbar gelagert oder anders abgestützt oder aufgenommen werden, d.h. am oder im Anbaugehäuse montiert sind, desto einfacher gestaltet sich die Integration von Phasensteller und Vakuumpumpe an der Brennkraftmaschine.

Eine Vakuumpumpe des Verbrennungsmotors kann über den Phasensteller, d.h. vom Phasensteller her angetrieben werden. Falls die Vakuumpumpe eine Rotationspumpe mit wenigstens einem drehbaren Förderglied ist, kann einer der Rotoren verdrehgesichert mit dem Förderglied verbunden sein. Anstatt einer drehsteifen Verbindung kann bei einer koaxialen Anordnung nebeneinander auf der gleichen Drehachse einer der Rotoren des Phasenstellers über ein Getriebe mechanisch mit dem Förderglied der Pumpe gekoppelt sein, beispielsweise mittels eines Umlaufgetriebes. Bevorzugt werden außenachsige Getriebe. Bei Kopplung mittels eines außenachsigen Getriebes unterscheiden sich die Drehachsen des Phasenstellers und der zum Beispiel als Rotationspumpe gebildeten Vakuumpumpe. Zweckmäßigerweise sind die Drehachsen in diesem Falle zueinander parallel. Die Getriebe können außenachsige Stirnradgetriebe sein. Grundsätzlich kann das Getriebe jedoch auch innenachsig oder mittels eines Zugmittels wie beispielsweise eines Zahnriemens gebildet sein. Mittels eines Getriebes kann die Drehzahl des Rotor oder Stators vorteilhafterweise in eine höhere Drehzahl des Förderglieds übersetzt werden. Durch eine Übersetzung der Drehzahl des auf die Pumpe abtreibenden Rotors ins Schnelle kann die Pumpe bei gleicher Förderleistung mit einem kleineren Volumen und dementsprechend geringerem Bauraumbedarf realisiert werden. Durch eine Untersetzung der Drehzahl ins Langsame können die Reibleistung und in der Folge der Verschleiß verringert werden.

Der Phasensteller ist fluidisch verstellbar bzw. betätigbar. Er kann insbesondere als fluidischer Schwenkmotor gebildet sein. Beispiele für Schwenkmotoren werden in der US 2,861,557 und der US 4,858,572 beschrieben.

Für den fluidischen Phasenstellers ist erfindungsgemäß für das Druckfluid, mittels dem die Phasenlage des Rotors relativ zum Stator verstellt wird, ein Druckspeicher vorgesehen, um eine ausreichende Stellgeschwindigkeit des Phasenstellers zu gewährleisten. Wird der Phasensteller in Abhängigkeit von einer Drehzahl der Brennkraftmaschine mit Druckfluid versorgt, vorzugsweise mittels einer von der Brennkraftmaschine angetriebenen Pumpe, beispielsweise einer Schmiermittelpumpe zur Versorgung der Brennkraftmaschine mit Schmiermittel, kann der Druck solch einer Druckfluidversorgung innerhalb des Betriebsbereichs der Brennkraftmaschine größeren Schwankungen unterliegen. Der Druckspeicher sorgt dafür, dass der Phasensteller auch unter ungünstigen Bedingungen mit einem ausreichenden Druck und mit einer ausreichenden Menge des Druckfluids versorgt wird. Vorteilhafterweise nimmt das Anbaugehäuse den Druckspeicher, gegebenenfalls nur einen Teil des Druckspeichers oder auch nur eine oder mehrere bewegliche Komponente(n) des Druckspeichers, die der Bereitstellung des Drucks dienen, auf. Der Druckspeicher kann auch in einem eigenen Gehäuse angeordnet sein, das an einem Gehäuseteil des Anbaugehäuses montiert ist. In derartigen Ausführungen werden das Anbaugehäuseteil und das montierte Druckspeichergehäuse zusammen als Anbaugehäuse oder Teil des Anbaugehäuses verstanden. In bevorzugten Ausführungen bildet das Anbaugehäuse jedoch in einem Stück sowohl ein oder mehrere Montagestellen für die Montage an der Brennkraftmaschine. Das Anbaugehäuse bildet gemäß der Erfindung eine Wandung des Druckspeichers.

Der Druckspeicher weist eine Druckkammer und eine die Druckkammer begrenzende Wandstruktur auf, die gegen eine rückstellende Elastizitätskraft beweglich ist. Die bewegliche Wandstruktur kann eine elastisch flexible, aber fluiddichte Wandstruktur oder vorzugsweise ein in der Druckkammer hin und her beweglicher Kolben sein. Im ersten Fall kann die Wandstruktur an der Kammerwand befestigt sein. Sie kann selbst ein Federglied bilden, das die rückstellende Elastizitätskraft erzeugt. Der Druckspeicher wäre ein Membranspeicher mit einer elastischen oder gegebenenfalls nur flexiblen Membran, die von einem zusätzlichen Federglied gespannt wird. Im anderen Fall stützt sich der Kolben an einem Federglied ab. Das Federglied für den Kolben oder die nur flexible Wandstruktur kann von einer Gasdruckkammer gebildet werden, ist vorzugsweise jedoch eine mechanische Feder, beispielsweise eine Spiralfeder, die bei einer Erhöhung des Drucks in der Kammer gespannt wird, vorzugsweise auf Druck. Das Anbaugehäuse lagert vorzugsweise den Kolben oder stützt das Federglied ab, in dem einen Fall die in sich elastische Wandstruktur und im anderen Fall die Gasdruck- oder Mechanikfeder.

Ein Druckspeicher für den Phasensteller ist grundsätzlich vorteilhaft, auch für die Kombination von Phasensteller und einer Vakuumpumpe oder nur in Verbindung mit dem Merkmal der Integration eines Phasenstellers und einer Vakuumpumpe in oder an einem gemeinsamen Anbaugehäuse. Die Kombination eines Phasenstellers für eine oder an einer Brennkraftmaschine und eines Druckspeichers für das der Verstellung des Phasenstellers dienende Druckfluid kann daher auch bereits als solche ein Gegenstand der Erfindung sein. Eine derartige Vorrichtung zur Verstellung der Phasenlage einer Nockenwelle relativ zu einer Kurbelwelle einer Brennkraftmaschine umfasst einen Phasensteller für die Verstellung der Phasenlage der Nockenwelle und einen Druckspeicher zur Sicherstellung eines ausreichenden Fluiddrucks für den Phasensteller. Ferner dient der Druckspeicher als Polster oder Reservoir, indem er die für die Verstellung verfügbare Fluidmenge vergrößert. Der Phasensteller und der Druckspeicher weisen vorteilhafterweise eines oder mehrere der hier offenbarten Merkmale auf und können insbesondere einem oder mehreren der Ansprüche entsprechen. Eine derartige Vorrichtung kann eines oder mehrere der hier im Zusammenhang mit der Vakuumpumpe offenbarten Merkmale aufweisen.

Der Druckspeicher ist vorzugsweise nur dem Phasensteller zugeordnet. Falls die Vorrichtung mehrere Phasensteller aufweist, kann für jeden dieser Phasensteller jeweils ein eigener Druckspeicher oder für die mehreren Phasensteller ein gemeinsamer Druckspeicher vorgesehen sein.

Das Anbaugehäuse umfasst in bevorzugten Ausführungen ein Anbaugehäuseteil und einen oder mehrere an dem Anbaugehäuseteil befestigte(n) Deckel. Das Anbaugehäuseteil erfüllt eine oder mehrere der für den Betrieb des Phasenstellers und der Pumpe erforderlichen Funktionen, beispielsweise der Lagerung und Fluidverteilung. Das Anbaugehäuseteil ist in einem Stück gefertigt, d.h. in einem Verfahren der Urformung geformt und vorzugsweise materialabtragend nachbearbeitet. Das Anbaugehäuse kann mehrere derartige Gehäuseteile umfassen, die jeweils wenigstens eine der für den Betrieb der Vorrichtung erforderlichen Funktionen wie beispielsweise des Lagerns oder Fluidverteilens erfüllt. In bevorzugten Ausführungen besteht das Anbaugehäuse aus einem einzigen Anbaugehäuseteil zur Erfüllung einer oder mehrerer für den Betrieb der Vorrichtung erforderlichen Funktionen und darüber hinaus lediglich noch aus einem oder mehreren Gehäusedeckel(n) für einen schmutz- oder vorzugsweise fluiddichten Abschluss des Anbaugehäuseteils oder einer oder mehrerer interner oder externer Kammer(n) des Anbaugehäuseteils.

Anstatt der genannten Funktionen des Abstützens, Drehlagerns oder Aufnehmen von Komponenten oder der Bildung oder des Abstützens von Komponenten des Druckspeichers kann das Anbaugehäuse ein oder mehrere andere Funktionen, beispielsweise die Verteilung von Schmieröl für die Pumpe oder eines nicht hydraulischen Phasenstellers oder die Verteilung des Druckfluids für einen fluidischen Phasensteller übernehmen. Bevorzugter erfüllt das Anbaugehäuse jedoch wenigstens eine der bereits beschriebenen Funktionen und wenigstens eine dieser anderen Funktionen.

Die Pumpe wird vorzugsweise mit dem Schmieröl für die Brennkraftmaschine geschmiert. Hinsichtlich der Schmierölversorgung ist noch zu bemerken, dass der Phasensteller in fluidischen Ausführungen vorzugsweise mit dem Schmieröl der Brennkraftmaschine als Druckfluid betrieben und das gleiche Schmieröl auch zur Schmierung der Vakuumpumpe verwendet wird.

Wird der Phasensteller mit dem Schmieröl für die Brennkraftmaschine betrieben, kann das Schmieröl von der Nockenwelle zum Phasensteller und dem bevorzugt vorhandenen Druckspeicher geführt werden. Alternativ oder zusätzlich wird das Schmieröl in bevorzugten Ausführungen gesondert herangeführt, vorzugsweise in oder an dem Maschinengehäuse der Brennkraftmaschine. In vorteilhaften Ausführungen weist das Anbaugehäuse für das Schmieröl einen Fluidanschluss auf für einen Anschluss an die betreffende Schmierölzuführung in oder an dem Maschinengehäuse der Brennkraftmaschine. Wird der Phasensteller nicht mit dem Schmieröl der Brennkraftmaschine betrieben oder die Vakuumpumpe nicht mit dem Schmieröl geschmiert, kann das Anbaugehäuse mit Vorteil dennoch einen Fluidanschluss für die Heranführung eines anderen Druckfluids oder Schmiermittels aufweisen.

Der Phasensteller wird erfindungsgemäß über ein Rückschlagventil, das stromaufwärts des Phasenstellers angeordnet ist, mit dem Druckfluid versorgt. Wird eine Vakuumpumpe mit dem Druckfluid geschmiert, können beide Komponenten über das gleiche Rückschlagventil mit Druckfluid bzw. Schmieröl versorgt werden. Es kann alternativ aber auch für jede dieser beiden Komponenten jeweils ein eigenes Rückschlagventil vorgesehen sein. Anstatt eines einfachen Rückschlagventils oder gegebenenfalls mehrerer Rückschlagventile kann grundsätzlich auch ein anderes Sperrmittel vorgesehen sein, beispielsweise ein Schieber. Das Sperrmittel, oder die mehreren Sperrmittel ist oder sind vorzugsweise nur dem Phasensteller oder nur der Pumpe zugeordnet, also im Strom des jeweiligen Fluids unmittelbar stromaufwärts von der betreffenden Komponente oder einem oder mehreren Steuermittel(n) für die betreffende Komponente angeordnet, um eine größtmögliche Versorgungssicherheit oder kürzest mögliche Ansprechzeit zu gewährleisten. Das Sperrmittel für den Phasensteller ist vorzugsweise stromaufwärts von dem Druckspeicher angeordnet. Die Kombination eines Phasenstellers mit einem solchen Sperrmittel in Kombination mit dem Druckspeicher, bildet die Erfindung. Sowohl der Druckspeicher als auch das Sperrmittel, vorzugsweise beide Komponenten in Kombination, dient der Sicherstellung eines ausreichenden Fluiddrucks, auch in kritischen Situationen, beispielsweise bei niedriger Drehzahl einer der Versorgung dienenden Pumpe oder einer durch die Bremskraftmaschine stark gedrosselten Fluidzuführung.

In einer Weiterbildung verfügt die Vorrichtung über eine Detektinoseinrichtung zur Ermittlung der Drehwinkelposition der zu verstellenden Nockenwelle. Die Detektionseinrichtung weist in bevorzugten Ausführungen einen Drehwinkelgeber, vorzugsweise ein Geberrad, und einen dem Geber zugeordneten Sensor auf, der die Position des Sensors detektiert. Der Geber ist vorteilhafterweise mit dem zweiten Rotor verdrehgesichert verbunden. Falls dieser über Getrieberäder auf die zu verstellende Nockenwelle abtreibt, kann der Geber auch verdrehgesichert mit einem dieser Geberräder oder fest mit einem andersartigen Getriebeglied, beispielsweise Zahnriemen, verbunden sein. Vorzugsweise ist der Sensor in oder an dem Anbaugehäuse angeordnet. Der Drehwinkelgeber weist Marken auf, beispielsweise optisch oder vorzugsweise taktil detektierbare Marken. Entsprechend kann der Sensor beispielsweise ein optischer Sensor oder vorzugsweise ein taktiler Sensor sein. Der Drehwinkelgeber kann insbesondere als Geberrad mit wenigstens einem abragenden Vorsprung, vorzugsweise über den Umfang verteilt mehreren abragenden Vorsprüngen, gebildet sein, den oder die der Sensor abtastet.

Die Erfindung betrifft über den Phasensteller hinaus auch eine Brennkraftmaschine mit der montierten Einheit. Der erst Rotor des Phasenstellers wird mit einer zu der Kurbelwelle der Brennkraftmaschine proportionalen Drehzahl angetrieben, die üblicherweise bei Viertaktmotoren die halbe Drehzahl der Kurbelwelle ist. In bevorzugten Ausführungen ist der erste Rotor mechanisch mit der Kurbelwelle gekoppelt, bezieht seinen Antrieb also von der Kurbelwelle. Der zweite Rotor ist vorzugsweise verdrehgesichert an oder auf der Nockenwelle montiert. Das Anbaugehäuse ist vorzugsweise an dem Maschinengehäuse der Brennkraftmaschine, beispielsweise an einem Zylinderkopf montiert. Die Brennkraftmaschine kann insbesondere den Motor eines Fahrzeugs, vorzugsweise eines Automobils, bilden.

Das von der Vakuumpumpe mit Unterdruck zu versorgende Aggregat kann insbesondere ein Bremskraftverstärker oder ein anderes Servo-Aggregat des Fahrzeugs sein.

Vorteilhafte Merkmale werden auch in den Unteransprüchen und deren Kombinationen beschrieben.

Nachfolgend werden Ausfuhrungsbeispiele der Erfindung anhand von Figuren erläutert. An den Ausführungsbeispielen offenbar werdende Merkmale bilden je einzeln und in jeder Merkmalskombination die Gegenstände der Ansprüche und auch die vorstehend beschriebenen Ausgestaltungen vorteilhaft weiter. Es zeigen:
- Figur 1: eine an einer Brennkraftmaschine montierte Vorrichtung eines ersten Ausführungsbeispiels,
- Figur 2: den Schnitt A-A der Figur 1,
- Figur 3: die Vorrichtung des ersten Ausführungsbeispiels in schematischer Darstellung,
- Figur 4: eine Vorrichtung eines zweiten Ausführungsbeispiels,
- Figur 5: eine Vorrichtung eines dritten Ausführungsbeispiels,
- Figur 6: eine Vorrichtung eines vierten Ausführungsbeispiels und
- Figur 7: eine Vorrichtung eines fünften Ausführungsbeispiels.

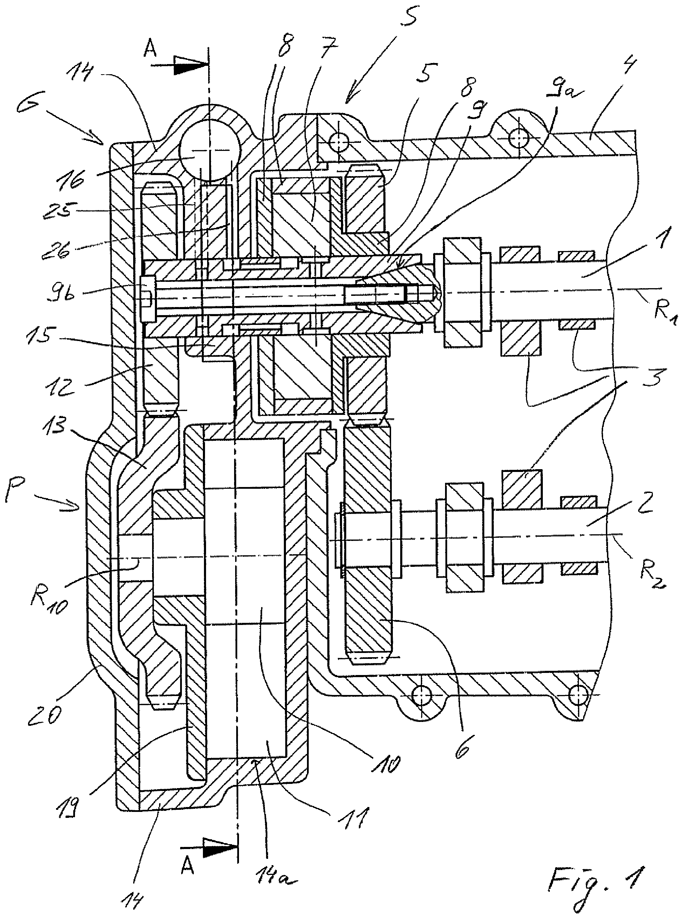

Figur 1 zeigt einen Phasensteller S und eine Vakuumpumpe P, die mittels eines gemeinsamen Anbaugehäuses G an einer Brennkraftmaschine angeordnet sind. Die Brennkraftmaschine weist zwei nebeneinander angeordnete Nockenwellen 1 und 2 mit Nocken 3 auf, von denen die eine der Steuerung von Einlassventilen und die andere der Steuerung von Auslassventilen der Brennkraftmaschine dient. Die Nockenwellen 1 und 2 sind in einem Maschinengehäuse 4, im Ausführungsbeispiel ein Zylinderkopf, der Brennkraftmaschine um die jeweilige Drehachse R₁ und R₂ drehbar angeordnet. Die Nockenwelle 1 wird von einer Kurbelwelle der Brennkraftmaschine angetrieben, beispielsweise über ein Antriebsrad, das an einem vom Phasensteller S abgewandten, nicht dargestellten Ende der Nockenwelle 1 angeordnet ist.

Der Phasensteller 5 weist ein Getrieberad 5 auf, über das er die Nockenwelle 2 antreibt. Das Getrieberad 5 ist ein außenverzahntes Stirnzahnrad. Es steht mit einem weiteren Getrieberad 6, das ebenfalls als außenverzahntes Stirnzahnrad gebildet ist, in einem Zahneingriff Das Getrieberad 6 ist mit der Nockenwelle 2 verdrehgesichert verbunden. Die Nockenwelle 1 wird somit in nicht veränderbarer Phasenlage zur Kurbelwelle von dieser angetrieben. Die Phasenlage der Nockenwelle 2 ist hingegen mittels des Phasenstellers S relativ zur Kurbelwelle und relativ zur Nockenwelle 1 verstellbar. Sie wird über den Phasensteller S angetrieben.

Der Phasensteller S umfasst einen ersten Rotor 7 und einen zweiten Rotor 8, die um die Drehachse R₁ der Nockenwelle 1 relativ zueinander über einen vorgegebenen Drehwinkelverstellbereich drehbeweglich sind. Der erste Rotor 7 ist verdrehgesichert mit der Nockenwelle 1 und der zweite Rotor 8 ist verdrehgesichert mit dem Getrieberad 5 verbunden. Bei drehender Kurbelwelle nimmt der erste Rotor 7 bei seiner Drehbewegung den zweiten Rotor 8 mit, der allerdings innerhalb des Drehwinkelverstellbereichs in seiner Phasenlage relativ zu dem ersten Rotor 7 verstellbar ist. Die Phasenlage der Nockenwelle 2 relativ zur Kurbelwelle entspricht der Phasenlage des zweiten Rotors 8 relativ zum ersten Rotor 7.

Die Vakuumpumpe P ist eine Rotationspumpe, im Ausführungsbeispiel eine Flügelzellenpumpe. Sie umfasst einen Rotor 10 und einen von dem Rotor 10 linear beweglich geführten Flügel 11, die ein Förderglied 10, 11 der Pumpe P bilden. Der Rotor 10 ist um eine Drehachse R₁₀ drehbar, die von der Drehachse R₁ parallel beabstandet ist. Das Förderglied 10, 11 wird von der Kurbelwelle über den Phasensteller S drehangetrieben. Dem Drehantrieb dient ein außenachsige Stirnzahnradgetriebe bestehend aus einem verdrehgesichert mit dem ersten Rotor 7 verbundenen Getrieberad 12 und einem verdrehgesichert mit dem Rotor 10 der Vakuumpumpe P verbundenen Getrieberad 13. Die Getrieberäder 12 und 13 stehen miteinander in einem Zahneingriff Die Vakuumpumpe P wird über das von den Getrieberädern 12 und 13 gebildete außenachsige Stirnradgetriebe mit einer Untersetzung, d.h. mit geringerer Drehzahl als der die Pumpe P antreibende Rotor 7, angetrieben. Durch die Untersetzung ins Langsame kann die Reibleistung und entsprechend der Verschleiß, ferner auch das Geräusch der Pumpe P gering gehalten werden. In ebenfalls bevorzugten alternativen Ausführungen kann bei Umkehrung der Übersetzungsverhältnisse die Pumpe P mit einer höheren Drehzahl als der antreibende Rotor 7 angetrieben und dadurch die Größe der Pumpe P verringert werden.

Das Förderglied 10, 11 ist in einer Pumpenkammer aufgenommen, die von dem Anbaugehäuse G gebildet wird. Das Anbaugehäuse G besteht im Wesentlichen aus einem Anbaugehäuseteil 14, das zu einem größeren Teil die Wandung der Pumpenkammer bildet, einem die Pumpenkammer abschließenden inneren Gehäusedeckel 19 und einem das Anbaugehäuseteil 14 nach außen abschließenden äußeren Gehäusedeckel 20. Das Anbaugehäuse G ist am Maschinengehäuse 4, im Ausführungsbeispiel dem Zylinderkopf, befestigt. Der Befestigung dient ausschließlich das Anbaugehäuseteil 14, das hierfür um eine seitliche Öffnung des Maschinengehäuses 4 vollständig laufend einen Anschlussflansch für eine feste und dichte Befestigung bildet. Das Anbaugehäuse G weist für die Vakuumpumpe P auf einer Niederdruckseite einen Einlass für ein Fluid, vorzugsweise Luft, und auf einer Auslassseite einen Auslass für das angesaugte, im Druck erhöhte Fluid auf. An den Einlass der Pumpe P ist ein Aggregat oder sind mehrere Aggregate angeschlossen, das oder die mit dem Unterdruck versorgt wird oder werden, beispielsweise ein nicht dargestellter Bremskraftverstärker.

Das Anbaugehäuse G ist bezüglich der Vakuumpumpe P als solche geschlossen, abgesehen von den notwendigen Anschlüssen, und für den Phasensteller S zur Seite der Brennkraftmaschine hin offen. Im montierten Zustand schließt es das Maschinengehäuse 4 um die Drehachse R₁ herum fluiddicht ab. Das Anbaugehäuses G lagert den ersten Rotor 7 in solch einer Position und Ausrichtung relativ zu seiner Kontaktfläche mit dem Maschinengehäuse 4, dass die Drehachse R₁ des Rotors 7 mit der Drehachse R₁ der Nockenwelle 1 im positionierten Zustand des Anbaugehäuses G fluchtet und der Rotor 7 dementsprechend verdrehgesichert mit der Nockenwelle 1 und das Anbaugehäuse G mit dem Maschinengehäuse 4 verbunden werden können. Ein Monteur oder vorzugsweise Montageroboter muss den Phasensteller S für die Montage insbesondere des ersten Rotors 7, nicht separat greifen und positionieren. Handhabung und Positionierung des Phasenstellers S erfolgen einheitlich mit der Handhabung und Positionierung des Anbaugehäuse G. Die Vorrichtung bildet somit eine Montageeinheit. Mit der Montage des Anbaugehäuses G ist gleichzeitig auch die Pumpe P montiert.

Aufgrund der Anordnung des Phasenstellers S und der Vakuumpumpe P nebeneinander und mit axialer Überlappung ist die gesamte Vorrichtung vorteilhaft flach. Der Teil des Anbaugehäuses G, der die Vakuumpumpe P beherbergt, ist neben dem Teil des Anbaugehäuses G angeordnet, der den Phasensteller S lagert und zumindest über einen Teil seiner axialen Länge auch umgibt. Entsprechend sind der Anschlussflansch des Anbaugehäuses G und der die Vakuumpumpe P beherbergende Teil nebeneinander angeordnet. Eine Wandung des Anbaugehäuses G liegt in Kontakt mit dem Maschinengehäuse 4 an diesem neben dem Anschlussflansch an. Das Maschinengehäuse 4 könnte in einer Modifikation auch eine Wandung des die Pumpe P beherbergenden Teils des Anbaugehäuses G, im Ausführungsbeispiel eine Wandung der Pumpenkammer, bilden. In Bezug auf die Dichtigkeit ist jedoch eine vollständige Umhüllung der Pumpenkammer durch das Anbaugehäuse G vorteilhafter.

Das Anbaugehäuse G, im Ausführungsbeispiel das Anbaugehäuseteil 14, lagert den ersten Rotor 7 des Phasenstellers S um die Drehachse R₁ der Nockenwelle 1 drehbar. Es bildet mit einer verdrehgesichert mit dem Rotor 7 verbundenen Welle 9 ein Drehgelenk, im Ausführungsbeispiel ein Drehgleitlager. Das Anbaugehäuse G bildet eine Buchse 15 der Drehlagerung. Die Welle 9 durchragt die Buchse 15. Der erste Rotor 7 ist zwischen der Buchse 15 und der Nockenwelle 1 angeordnet, und das Getrieberad 12 sitzt an der von der Nockenwelle 1 abgewandten Seite der Buchse 15 auf dem dort die Buchse 15 durchragenden Ende der Welle 9.

Die Welle 9 verlängert die Nockenwelle 1 über deren axiales Ende. Die Nockenwelle 1 und die Welle 9 sind mittels Pressverbindung miteinander verbunden. Für die Pressverbindung weist die Nockenwelle 1 an ihrem Ende einen Außenkonus und die Welle 9 einen angepasst geformten Innenkonus 9a auf. Die zur Drehachse R₁ geneigten Konusflächen werden im montierten Zustand mittels einer zentralen Befestigungsschraube 9b, die die hohle Welle 9 durchragt und in axialer Richtung mit der Nockenwelle 1 verschraubt ist, axial auf- und gegeneinander gepresst.

Der Phasensteller S ist fluidisch verstellbar. Für die Verstellung wird er gemeinsam mit der Brennkraftmaschine mit einem Drucköl versorgt, das für die Brennkraftmaschine als Schmieröl und für den Phasensteller S als Druckfluid für die Verstellung der Phasenlage verwendet wird. Was die Lagerung des ersten Rotors 7 betrifft, könnten der Rotor 7 und die Welle 9 in einem Stück geformt sein. Die Welle 9 erfüllt in Doppelfunktion jedoch auch die Funktion der Fluidverteilung für den Phasensteller S, dient also als Fluidverteilerwelle. Sie ist nicht zuletzt aus daraus sich ergebenden fertigungstechnischen Gründen separat vom Rotor 7 geformt und mit dem Rotor 7 verdrehgesichert verbunden.

Das Anbaugehäuse G, im Ausführungsbeispiel das Anbaugehäuseteil 14, dient nicht nur der Lagerung des Phasenstellers S, nämlich der direkten Drehlagerung des ersten Rotors 7 und der über die Welle 9 als Zwischenglied indirekten Drehlagerung des zweiten Rotors 8, sondern weist auch Steuerleitungen in Form integrierter Fluidkanäle für die Zufuhr und Abfuhr des Druckfluids für den Phasensteller auf. Von den Fluidzu- und -abführungen sind in Figur 1 zwei Steuerleitungen 25 und 26 und ein Aufnahmeraum 16, im Ausführungsbeispiel eine Bohrung, zu erkennen. Die Rotoren 7 und 8 werden über den Aufnahmeraum 16 und die Steuerleitungen 25 und 26 für die Verstellung der Phasenlage mit dem Druckfluid beaufschlagt.

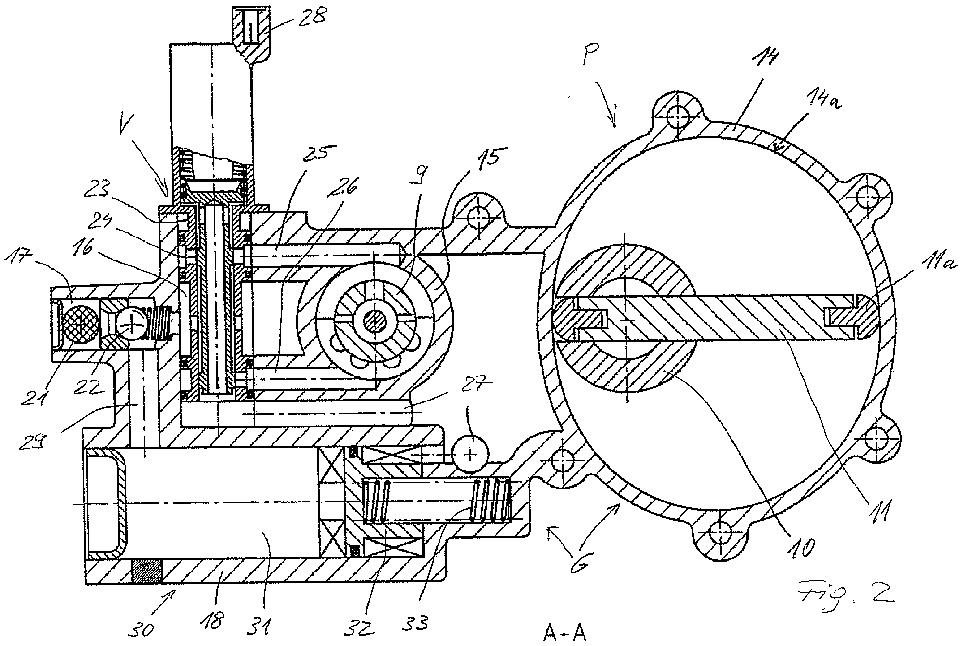

Figur 2 zeigt die Vorrichtung in dem in Figur 1 eingetragenen Schnitt A-A. Dargestellt sind ferner in Figur 1 nicht gezeichnete, außerhalb der Schnittebene der Figur 1 angeordnete Komponenten für die Beaufschlagung des Phasenstellers S mit dem Druckfluid. Zu erkennen ist unter anderem, das in der vom Anbaugehäuse G gebildeten Pumpenkammer aufgenommene Förderglied 10, 11. Das Anbaugehäuseteil 14 bildet einen topfförmigen Teil der Pumpenkammer mit einem dem Maschinengehäuse 4 zugewandten Boden (Figur 1) und einer vom Boden umlaufend aufragenden Seitenwandung, die an ihrer Mantelinnenfläche eine Lauffläche 14a für das Förderglied 10, 11 bildet. Das Förderglied 10, 11 weist wie bereits erwähnt den Rotor 10 auf, den das Anbaugehäuse G um die Drehachse R₁₀ drehbar lagert, und den quer zur Drehachse R₁₀ vom Rotor 10 linear beweglich geführten Flügel 11, an dessen beiden Enden Gleitelemente 11a angeordnet sind, die bei einem Drehantrieb des Förderglieds 10, 11 längs der Lauffläche 14a gleiten. Der Flügel 11 teilt die Pumpenkammer in zwei Kammern, die sich pro Umlauf des Flügels 11 periodisch einmal vergrößern und verkleinern und auf diese Weise das Fluid am Einlass der Pumpe P ansaugen und durch den Auslass ausstoßen.

In Figur 2 sind auch die beiden Steuerleitungen 25 und 26 dargestellt. Der Schnitt A-A verläuft in Figur 2 oberhalb der Drehachse R₁ durch den Steuerkanal 25 und unterhalb der Drehachse R₁ durch den Steuerkanal 26. Die Steuerkanäle 25 und 26 sind, wie Figur 1 zeigt, längs der Drehachse R₁ zueinander versetzt. Durch den Aufnahmeraum 16 verläuft der Schnitt A-A zentral. Mit dem durch die Steuerleitung 25 herangeführten Druckfluid wird der zweite Rotor 8 relativ zum ersten Rotor 7 in die eine Richtung seiner relativen Drehbeweglichkeit und mit dem durch die Steuerleitung 26 herangeführten Druckfluid in die andere Richtung beaufschlagt. Das durch eine der Steuerleitungen 25 und 26 herangeführte Druckfluid wird über einen zentralen Hohlraum und das durch die andere der Steuerleitungen 25 und 26 herangeführte Druckfluid durch einen peripheren Kanal der Welle 9 zwischen die Rotoren 7 und 8 geleitet, so dass der zweite Rotor 8 einmal in die eine und das andere Mal in die andere Drehrichtung relativ zu dem ersten Rotor 7 verstellt wird.

In dem Aufnahmeraum 16 ist ein Steuermittel V, im Ausführungsbeispiel ein Steuerventil, mit einem relativ zum Anbaugehäuseteil 14 nicht beweglichen Ventilzylinder 23 und einem im Ventilzylinder 23 bewegbaren Ventilkolben 24 aufgenommen. Das Steuermittel V kann insbesondere als Proportionalventil oder Schaltventil ausgeführt sein. Der Ventilkolben 24 ist zwischen zwei Endpositionen axial hin und her beweglich. Figur 2 zeigt den Ventilkolben 24 in einer Neutralposition zwischen den beiden Endpositionen. In der Neutralposition verschließt er beide Steueröffnungen des Ventilzylinders 23, von denen die eine mit der Steuerleitung 25 und die andere mit der Steuerleitung 26 verbunden ist. Bei einer Bewegung aus der Neutralposition in Richtung auf die eine der Endpositionen wird jeweils eine der Steuerleitungen 25 und 26 über das Steuermittel V mit einer Hochdruckseite einer Druckfluidversorgung verbunden, während die jeweils andere der Steuerleitungen 25 und 26 von der Hochdruckseite getrennt ist. Durch die jeweils von der Hochdruckseite der Druckfluidversorgung getrennte Steuerleitung 25 oder 26 strömt das Druckfluid vom Phasensteller S ab und wird über eine Rückführleitung 27 zu einer Niederdruckseite der Druckfluidversorgung geführt. Mit "28" ist ein Anschluss bezeichnet, über den das Steuermittel V mit elektrischer Energie versorgt und mit Steuersignalen angesteuert wird.

Das Anbaugehäuseteil 14 bildet einen weiteren Aufnahmeraum 17, über den die Vorrichtung im montierten Zustand an die Druckfluidversorgung für den Phasensteller S angeschlossen ist, wobei das Druckfluid auch als Schmiermittel für die Vakuumpumpe genutzt wird. Das Anbaugehäuse G bildet somit bei dem weiteren Aufnahmeraum 17 auch einen Fluidanschluss für die Vorrichtung. Vom Anschluss führt ein Verbindungskanal in den Aufnahmeraum 17. In dem Verbindungskanal ist ein Filter 21, vorzugsweise ein Sieb, angeordnet. Der weitere Aufnahmeraum 17 ist im Schnitt der Figur 1 nicht dargestellt, ferner zeigt Figur 1 den Aufnahmeraum 16 ohne das Steuermittel V.

Zwischen dem Anschluss für das Druckfluid und dem Phasensteller S ist ein Sperrmittel 22, im Ausführungsbeispiel ein Rückschlagventil, angeordnet, das den Phasensteller S gegen einen Druckabfall in der Druckfluidversorgung sichert. Das Rückschlagventil 22 ist noch stromaufwärts von dem Steuermittel V angeordnet, im Ausführungsbeispiel ist es in dem weiteren Aufnahmeraum 17 angeordnet. Das Druckfluid strömt bei einer Verstellung der Phasenlage somit ab Erreichen eines durch das Rückschlagventil 22 vorgegebenen minimalen Überdrucks über den Anschluss, das Filter 21 und das Rückschlagventil 22 zum Steuermittel V und von dort entsprechend der axialen Position des Ventilkolbens 24 zum Phasensteller S.

Um eine ausreichende Stellgeschwindigkeit des Phasenstellers S bei Druckschwankungen in der Druckfluidversorgung zu gewährleisten, ist dem Phasensteller S ein Druckspeicher 30 zugeordnet. Der Druckspeicher 30 ist im Druckfluidkreis stromaufwärts von dem Steuermittel V und stromabwärts von dem Rückschlagventil 22 angeordnet. Stromabwärts von dem Rückschlagventil 22, genauer gesagt stromabwärts von einem Ventilsitz des Rückschlagventils 22, zweigt eine Verbindungsleitung 29 zum Druckspeicher 30 ab.

Das Anbaugehäuse G, im Ausführungsbeispiel wieder das Anbaugehäuseteil 14, bildet eine feste Wandung 18 einer Druckkammer 31 des Druckspeichers 30. Die Druckkammer 31 ist im Ausführungsbeispiel kreiszylindrisch, könnte grundsätzlich aber auch zylindrisch mit einem anderen Querschnitt sein. Die Druckkammer 31 ist an einer Seite mit einem Stopfen oder Deckel fluiddicht verschlossen. Von diesem Deckel oder Stopfen abgesehen bildet das Anbaugehäuseteil 14 alle festen Wandstrukturen der Druckkammer 31. In der Druckkammer 31 ist in Zylinderlängsrichtung ein Kolben 32 hin und her beweglich aufgenommen. Der Kolben 32 bildet eine bewegliche Wandstruktur der Druckkammer 31. Am Anbaugehäuseteil 14 ist ferner eine Feder 33 abgestützt, im Ausführungsbeispiel eine Spiralfeder. Die Feder 33 ist mit Vorspannung zwischen dem Anbaugehäuseteil 14 und dem Kolben 32 angeordnet und beaufschlagt mit ihrer Elastizitätskraft den Kolben 32 in Richtung auf eine Verkleinerung des Volumens der Druckkammer 31. Der Druckspeicher 30 ist so ausgelegt, nach Kammervolumen und Federspannung, dass stets gewährleistet ist, dass der Phasensteller S wenigstens einen Stellvorgang mit der geforderten hohen Stellgeschwindigkeit ausführt. Der Druckspeicher 30 ist in Figur 1 nicht dargestellt. Er ist außerhalb der Schnittebene der Figur 1 angeordnet und wäre in Figur 1 nur im Umriss zu erkennen.

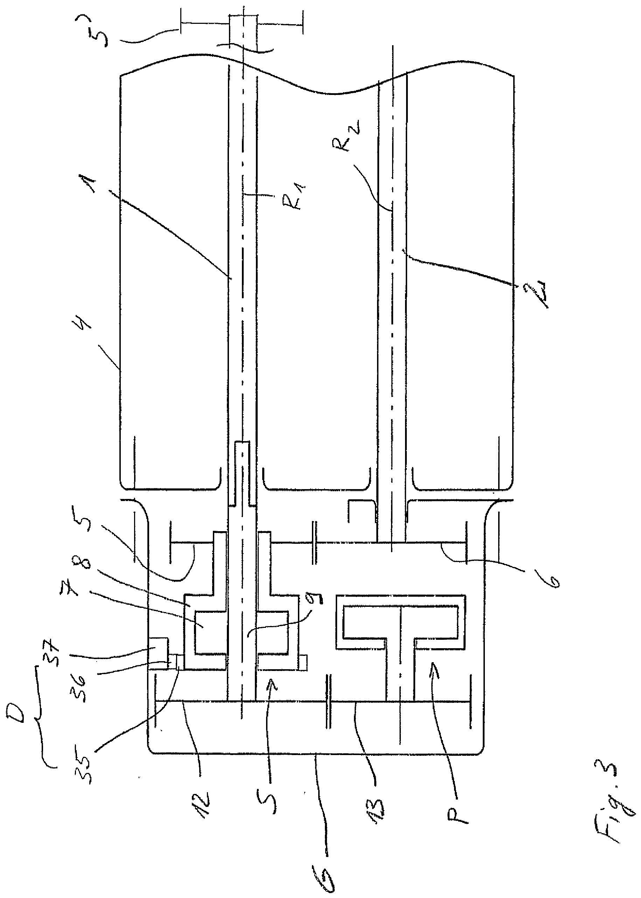

Figur 3 zeigt die Brennkraftmaschine mit der montierten Vorrichtung des ersten Ausführungsbeispiels in einer schematischen Darstellung, die den Vergleich mit alternativen Ausführungsbeispielen erleichtert. Angedeutet ist ein Antriebsrad 5', das am anderen stirnseitigen Ende der Nockenwelle 1 angeordnet und verdrehgesichert mit dieser verbunden ist. Die Nockenwelle 1 wird über das Antriebsrad 5' von der Kurbelwelle angetrieben. Alternativ könnte das Antriebsrad 5' auch auf der anderen Seite beim Phasensteller S angeordnet sein, beispielsweise noch auf der Nockenwelle 1, in der Figur 3 rechts vom Phasensteller S, oder vorzugsweise an dem von der Nockenwelle 1 abgewandten Ende des Phasenstellers S zwischen dem Phasensteller S und dem Getrieberad 12 oder noch bevorzugter auch noch an der vom Phasensteller S abgewandten Seite des Getrieberads 12. In derartigen Ausführungen ist die Welle 9 (Figur 1) vorzugsweise aus dem Anbaugehäuse G herausgeführt und das Antriebsrad 5' außerhalb des Anbaugehäuses G verdrehgesichert mit der Welle 9 verbunden. In noch einer alternativen Variante kann das Getrieberad 5 das Antriebsrad für die Nockenwellen 1 und 2, den Phasensteller S und die Vakuumpumpe P bilden, indem es mit einem von der Kurbelwelle angetriebenen weiteren Getriebeglied in einem Zahneingriff ist. In solch einer Ausführung würde der Phasensteller S die Phasenlage der Nockenwelle 1 verstellen, während die Nockenwelle 2 in fester Drehzahlbeziehung zur Kurbelwelle angetrieben würde. Hinsichtlich der hier gewählten Sprachregelung wäre in derartigen Ausführungen der Rotor 8 der erste Rotor und der Rotor 7 der zweite Rotor.

Die Vorrichtung ist auch mit einer Detektionseinrichtung D zur Ermittlung der Drehwinkelposition der zu verstellenden Nockenwelle, im Ausführungsbeispiel die Nockenwelle 2, ausgestattet, Die Detektionseinrichtung D umfasst einen Drehwinkelgeber 35, beispielsweise ein Geberrad, der an dem zweiten Rotor 8 des Phasenstellers S angeordnet ist, so dass er dessen Drehbewegung mitmacht. Im Ausführungsbeispiel ist der Geber 35 an einer äußeren Umfangsfläche des Rotors 8 angeordnet und zwecks Mitnahme durch den Rotor 8 mit diesem verdrehgesichert verbunden. Dem Geber 35 ist gegenüberliegend zugewandt ein Sensor 36 angeordnet. Der Sensor 36 kann insbesondere am Anbaugehäuse G abgestützt sein. Zur Detektionseinrichtung D gehört ferner eine Auswerteeinrichtung 37, die vorzugsweise ebenfalls im oder am Anbaugehäuse G angeordnet ist und die Signale des Sensors 36 verarbeitet. Die Detektionseinrichtung D ist Teil einer Regelungseinrichtung für die Einstellung der Phasenlage des Rotors 8 und somit der Nockenwelle 2. Der Regelungseinrichtung wird von einer Steuerung der Brennkraftmaschine eine vom den momentanen Betriebszustand der Brennkraftmaschine abhängige Führungsgröße vorgegeben. Das Ausgangssignal der Detektionseinrichtung D wird als Regelgröße aufgegeben. Die Regelungseinrichtung bildet aus der Führungsgröße und der Regelgröße eine Stellgröße für den Phasensteller S, die dem Steuermittel V (Figur 2) aufgegeben wird. Vorzugsweise wird dem Steuermittel V über den Anschluss 28 die Stellgröße aufgegeben. Alternativ kann auch die Regelungseinrichtung in oder an dem Anbaugehäuse G angeordnet sein und dem Steuermittel V über den Anschluss 28 die Führungsgröße der übergeordneten Steuerung der Brennkraftmaschine aufgegeben werden.

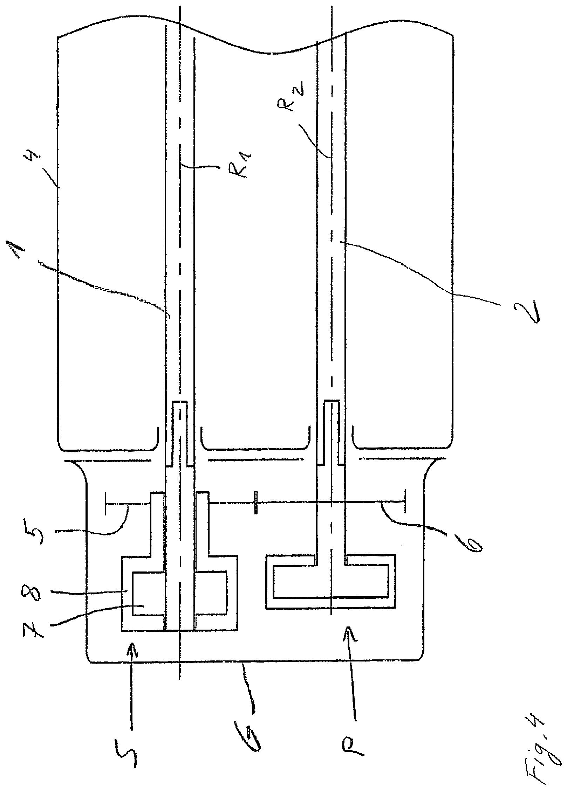

Figur 4 zeigt die Brennkraftmaschine mit einer Vorrichtung eines zweiten Ausführungsbeispiels im montierten Zustand in einer der Figur 3 entsprechenden schematischen Darstellung. Das zweite Ausführungsbeispiel unterscheidet sich vom ersten Ausführungsbeispiel nur hinsichtlich des Antriebs der Vakuumpumpe P. Das Förderglied 10, 11 der Vakuumpumpe ist im zweiten Ausführungsbeispiel verdrehgesichert mit dem Getrieberad 6 verbunden, so dass es drehsteif mit diesem und der Nockenwelle 2 vom zweiten Rotor 8 drehangetrieben wird. Die Getrieberäder 12 und 13 sind entfallen. Die Ausführungen zu den Antriebsvarianten des ersten Ausführungsbeispiels gelten auch für das zweite Ausführungsbeispiel.

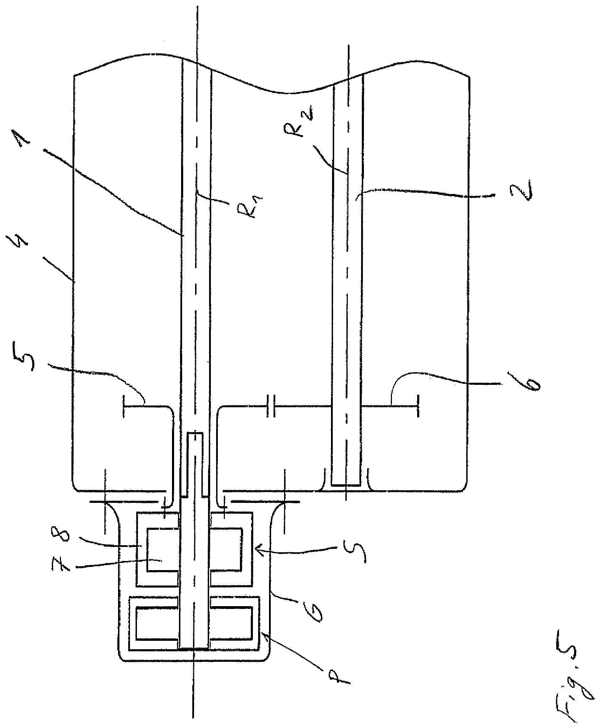

Figur 5 zeigt eine montierte Vorrichtung eines dritten Ausführungsbeispiels. Der Phasensteller S und das drehbewegliche Förderglied 10, 11 der Vakuumpumpe P sind axial zueinander versetzt längs der Drehachse R₁ der Nockenwelle 1 angeordnet. Der Rotor 7 ist wieder verdrehgesichert mit der Nockenwelle 1 verbunden und der Rotor 8 mit dem Antriebsrad 5. Die Vakuumpumpe P ist an der von der Nockenwelle 1 abgewandten Seite des Phasenstellers S angeordnet Der Rotor 10 der Vakuumpumpe P ist verdrehgesichert mit dem ersten Rotor 7 des Phasenstellers S verbunden. Somit wird der Rotor 7 über die Nockenwelle 1 von der Kurbelwelle angetrieben und nimmt den Rotor 8 bei der Drehbewegung entsprechend der relativen Phasenlage von Rotor 7 und Rotor 8 mit. Der Phasensteller S und die Vakuumpumpe P sind im gleichen Anbaugehäuse G angeordnet, das für die koaxiale Anordnung von Phasensteller S und Vakuumpumpe P gegenüber dem ersten und dem zweiten Ausführungsbeispiel entsprechend verlängert ist. Die Vakuumpumpe P ist wie im ersten Ausführungsbeispiel aus dem Kraftfluss herausgenommen, indem der Kraftfluss auf einer Abtriebseite des Phasenstellers S in eine Richtung über den Rotor 8 zur Nockenwelle 2 und in die andere Richtung zur Vakuumpumpe P verzweigt.

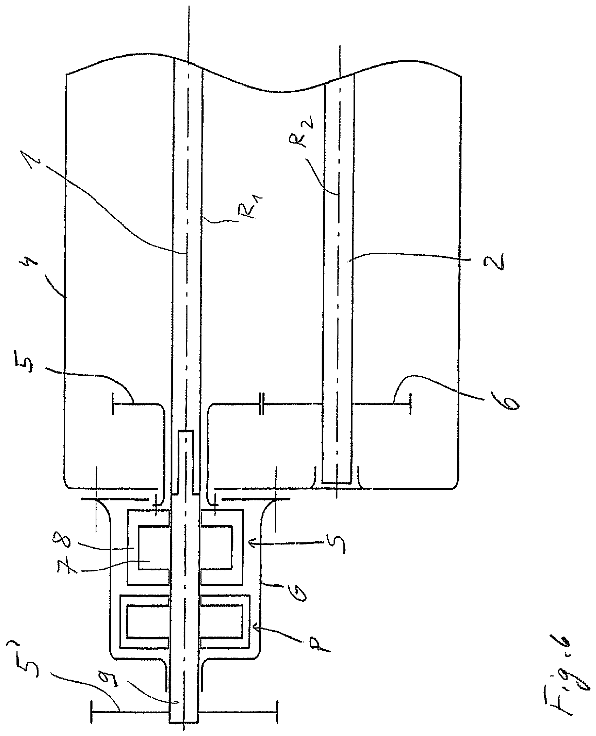

Figur 6 zeigt die montierte Vorrichtung in einem vierten Ausführungsbeispiel, das sich von dem dritten Ausführungsbeispiel dadurch unterscheidet, dass die Nockenwelle 1 über den Phasensteller S drehangetrieben wird, indem ein mit der Kurbelwelle gekoppeltes Antriebsrad 5' wie zum ersten Ausführungsbeispiel als Variante beschrieben an der gleichen Stirnseite der Nockenwelle 1 wie die Vorrichtung angeordnet ist. Die mit der Nockenwelle 1 verdrehgesichert verbundene Welle 9 durchragt das Anbaugehäuse G an der von der Nockenwelle 1 abgewandten Seite der Vorrichtung, so dass das Antriebsrad 5' außerhalb des Anbaugehäuses G an oder auf der Welle 9 angeordnet werden kann.

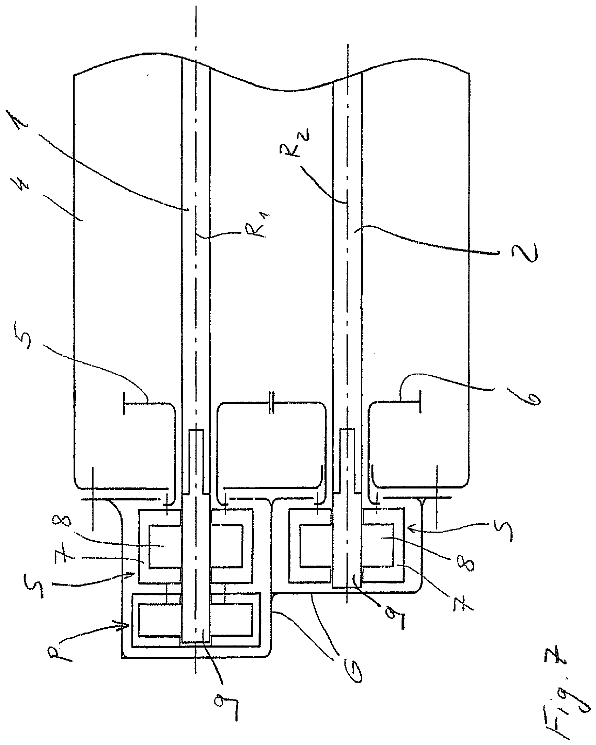

Figur 7 zeigt eine montierte Vorrichtung in einem fünften Ausführungsbeispiel. Die Vorrichtung umfasst zwei von einem vergrößerten Anbaugehäuse G gelagerte Phasensteller S, nämlich einen Phasensteller S für die Nockenwelle 1 und einen weiteren Phasensteller S für die Nockenwellen 2. Der zweite Rotor 8 des einen Phasenstellers S ist verdrehgesichert mit der Nockenwelle 1 und der zweite Rotor 8 des anderen Phasenstellers S ist verdrehgesichert mit der Nockenwelle 2 verbunden. Die ersten Rotoren 7 der beiden Phasensteller S sind je mit einem Getrieberad, der eine mit dem Getrieberad 5 und der andere mit dem weiteren Getrieberad 6, verdrehgesichert verbunden. Eines der Getrieberäder 5 und 6 wird von der Kurbelwelle angetrieben und treibt über den jeweils zugeordneten Phasensteller S auf die andere der Nockenwellen 1 und 2 ab. Ist beispielsweise die Nockenwelle 1 im Antriebsstrang näher bei der Kurbelwelle angeordnet, treibt die Kurbelwelle 1 über das Getrieberad 5 den Rotor 7 des zugeordneten Phasenstellers S, dieser den Rotor 8 des gleichen Phasenstellers S und der Rotor 8 die zu verstellende Nockenwelle 1 an. Ferner treibt das Getrieberad 5 auf das Getrieberad 6 ab. Vom Getrieberad 6 erfolgt der Abtrieb über den ersten Rotor 7 des weiteren Phasenstellers S auf dessen Rotor 8, der verdrehgesichert mit der Nockenwelle 2 verbunden ist. Der eine der Phasensteller S ist wie im dritten und vierten Ausführungsbeispiel gemeinsam mit der Vakuumpumpe P längs der Drehachse R₁ angeordnet. Sein zweiter Rotor 7 ist mit dem Förderglied 10, 11, d.h. dem Rotor 10 der Vakuumpumpe P, verdrehgesichert verbunden. Das Anbaugehäuse G, vorzugsweise ein in einem Stück geformtes Anbaugehäuseteil 14, lagert die zweiten Rotoren 7 jeweils direkt und die ersten Rotoren 8 indirekt über jeweils eine Welle 9 drehbar.

Soweit zu dem zweiten, dritten, vierten und fünften Ausführungsbeispielen keine Ausführungen gemacht werden, gelten die Ausführungen zum ersten Ausführungsbeispiel.

### Bezugszeichen:

- 1: Nockenwelle
- 2: Nockenwelle
- 3: Nocken
- 4: Maschinengehäuse, Zylinderkopf
- 5: Getrieberad
- 6: Getrieberad
- 7: erster Rotor
- 8: zweiter Rotor
- 9: Welle
- 9a: Schrägfläche, Innenkonus
- 9b: Befestigungsschraube
- 10: Rotor
- 11: Flügel
- 11a: Gleitelement
- 12: Getrieberad
- 13: Getrieberad
- 14: Anbaugehäuseteil
- 15: Lagerbuchse
- 16: Aufnahmeraum
- 17: Aufnahmeraum, Anschluss
- 18: Druckkammer-Wandstruktur
- 19: Innerer Deckel
- 20: Äußerer Deckel
- 21: Filter, Sieb
- 22: Sperrmittel, Rückschlagventil
- 23: Ventilzylinder
- 24: Ventilkolben
- 25: Steuerleitung
- 26: Steuerleitung
- 27: Rückftihrleitung
- 28: Anschluss
- 29: Fluidleitung
- 30: Druckspeicher
- 31: Druckkammer
- 32: Kolben
- 33: Feder
- 34: -
- 35: Drehwinkelgeber
- 36: Sensor
- 37: Auswerteeinrichtung
- D: Detektionseinrichtung
- G: Anbaugehäuse
- P: Pumpe
- S: Phasensteller
- V: Steuermittel, Steuerventil
- R₁: Drehachse
- R₂: Drehachse
- R₁₀: Drehachse

## Patentansprüche

1. Vorrichtung zur Verstellung der Phasenlage einer Nockenwelle (1, 2) einer Brennkraftmaschine, die Vorrichtung umfassend:
a) einen mit einem Druckfluid verstellbaren Phasensteller (S) für die Verstellung der Phasenlage der Nockenwelle (1, 2) relativ zu einer Kurbelwelle der Brennkraftmaschine,
b) ein an der Brennkraftmaschine montierbares Anbaugehäuse (G), das für den Phasensteller (S) ein Gehäuse oder zumindest einen Gehäusedeckel bildet,
c) und einen Druckspeicher (30) für das Druckfluid zur Sicherstellung einer ausreichend großen Stellgeschwindigkeit des Phasenstellers (S),
d) wobei das Anbaugehäuse (G) eine Wandung (18) des Druckspeichers (30) bildet, **dadurch gekennzeichnet, dass**
e) der Phasensteller über ein stromaufwärts von dem Phasensteller angeordnetes und als Rückschlagventil gebildetes Sperrmittel (22) mit dem Druckfluid versorgt wird und
f) das Sperrmittel (22) in dem Anbaugehäuse (G) angeordnet ist.

2. Vorrichtung nach dem vorhergehenden Anspruch, **dadurch gekennzeichnet, dass** der Druckspeicher (30) so ausgelegt ist, nach Kammervolumen und Federspannung, dass stets gewährleistet ist, dass der Phasensteller (S) wenigstens einen Stellvorgang mit der geforderten hohen Stellgeschwindigkeit ausführt.

3. Vorrichtung nach einem der vorhergehenden Ansprüche, **dadurch gekennzeichnet, dass** wenigstens eines der folgenden Merkmale erfüllt ist:
(i) das Sperrmittel (22) ist stromaufwärts von dem Druckspeicher (30) angeordnet,
(ii) das Sperrmittel (22) ist nur für den Phasensteller (S) oder nur für den Phasensteller (S) und eine Vakuumpumpe (P) vorgesehen,
(iii) in einer Druckfluidzuführung für den Phasensteller (S) ist ein Filter (21) angeordnet, vorzugsweise in oder an dem Anbaugehäuse (G).

4. Vorrichtung nach einem der vorhergehenden Ansprüche, **dadurch gekennzeichnet, dass** das Anbaugehäuse (G) einen Aufnahmeraum (16) für ein Steuermittel (V), beispielsweise ein elektrisches Steuermittel, gegebenenfalls auch einen elektromotorischen Aktuator für den Phasensteller (S) aufweist.

5. Vorrichtung nach einem der vorhergehenden Ansprüche, **dadurch gekennzeichnet, dass** sich eine oder mehrere Leitung(en) (25, 26, 27) für ein Druckfluid, elektrische Energie oder Signale im Anbaugehäuse (G) oder außen an dem Anbaugehäuse (G) erstrecken.

6. Vorrichtung nach einem der vorhergehenden Ansprüche, **dadurch gekennzeichnet, dass** der Phasensteller (S) in Abhängigkeit von einer Drehzahl der Brennkraftmaschine mittels einer von der Brennkraftmaschine angetriebenen Pumpe mit dem Druckfluid, vorzugsweise einer Schmiermittelpumpe zur Versorgung der Brennkraftmaschine mit dem vom Schmiermittel gebildeten Druckfluid versorgt wird.

7. Vorrichtung nach dem vorhergehenden Anspruch, **dadurch gekennzeichnet, dass** der Druckspeicher (30) dafür sorgt, dass der Phasensteller (S) auch unter ungünstigen Bedingungen, bei denen der Druck der Druckfluidversorgung innerhalb des Betriebsbereichs der Brennkraftmaschine größeren Schwankungen unterliegt, mit einem ausreichenden Druck und mit einer ausreichenden Menge des Druckfluids versorgt wird.

8. Vorrichtung nach einem der vorhergehenden Ansprüche, **dadurch gekennzeichnet, dass** das Anbaugehäuse(G) in einem Stück sowohl ein oder mehrere Montagestelle(n) für die Montage an der Brennkraftmaschine als auch zumindest eine Wandung des Druckspeichers bildet.

9. Vorrichtung nach einem der vorhergehenden Ansprüche und wenigstens einem der folgenden Merkmale:
(i) das Anbaugehäuse (G) lagert wenigstens eine Komponente des Phasenstellers (S) oder eines Antriebs für den Phasensteller,
(ii) der Phasensteller (S) ist als fluidischer Schwenkmotor gebildet.

10. Vorrichtung nach einem der vorhergehenden Ansprüche, **dadurch gekennzeichnet, dass** der Druckspeicher (30) eine Druckkammer (31) aufweist, die von einer Wandstruktur (32) begrenzt wird, die gegen eine rückstellende Elastizitätskraft beweglich ist und vom Anbaugehäuse (G) abgestützt oder hin und her beweglich gelagert wird,
wobei wenigstens eines der folgenden Merkmale erfüllt ist:
(i) eine die Elastizitätskraft erzeugende Feder (33) stützt sich an dem Anbaugehäuse (G) ab,
(ii) ein Kolben bildet die bewegliche Wandstruktur (32),
(iii) die bewegliche Wandstruktur ist eine elastisch flexible, aber fluiddichte Wandstruktur.

11. Vorrichtung nach einem der vorhergehenden Ansprüche und wenigstens einem der folgenden Merkmale:
(i) der Phasensteller (S) ist über die Nockenwelle (1, 2) oder eine weitere Nockenwelle (2,1) der Brennkraftmaschine oder ein Maschinengehäuse (4) der Brennkraftmaschine mit dem Druckfluid versorgbar,
(ii) das Anbaugehäuse (G) weist für das Druckfluid einen Fluidanschluss (17) auf für einen Anschluss an eine Fluidzuführung in oder an einem Maschinengehäuse (4) der Brennkraftmaschine,
(iii) der Phasensteller (S) ist durch das Anbaugehäuse (G) mit dem Druckfluid versorgbar,
(iv) wenigstens eine Steuerleitung (25, 26) führt für eine Beaufschlagung des Phasenstellers (S) mit dem Druckfluid durch das Anbaugehäuse (G).

12. Vorrichtung nach einem der vorhergehenden Ansprüche, **dadurch gekennzeichnet, dass** der Phasensteller (P) einen ersten Rotor (7) und einen zweiten Rotor (8) aufweist und eine Drehwinkelposition, die die Rotoren (7, 8) relativ zueinander aufweisen verstellbar ist und dass ein Steuermittel (V) für die Verstellung der Drehwinkelposition in einem Aufnahmeraum (16) des Anbaugehäuses (G) angeordnet ist.

13. Vorrichtung nach einem der vorhergehenden Ansprüche, **dadurch gekennzeichnet, dass** die Brennkraftmaschine eine erste und eine zweite Nockenwelle (1, 2) aufweist, der Phasensteller (S) für die Verstellung der Phasenlage der ersten Nockenwelle (1, 2) vorgesehen ist und die Vorrichtung einen weiteren Phasensteller (S) für die Verstellung der Phasenlage der zweiten Nockenwelle (1, 2) aufweist, wobei das Anbaugehäuse vorzugsweise auch für den weiteren Phasensteller (S) ein Gehäuse oder zumindest einen Gehäusedeckel bildet und wobei der weitere Phasensteller (S) vorzugsweise entsprechend wenigstens einem der vorhergehenden Ansprüche gebildet ist.

14. Vorrichtung nach einem der vorhergehenden Ansprüche, umfassend eine Detektionseinrichtung (D) für eine Ermittlung der Drehwinkelposition der zu verstellenden Nockenwelle (1, 2), wobei vorzugsweise wenigstens eines der folgenden Merkmale erfüllt ist:
(i) die Detektionseinrichtung (D) ist in oder an dem Anbaugehäuse (D) angeordnet,
(ii) die Detektionseinrichtung (D) umfasst einen Drehwinkelgeber (35) und einen Sensor (36) zur Detektion der Drehwinkelposition des Drehwinkelgebers (35), wobei der Drehwinkelgeber vorzugsweise an einem Rotor (7, 8) des Phasenstellers (S) angeordnet und der Sensor (36) vorzugsweise in oder an dem Anbaugehäuse (G) angeordnet ist.

15. Vorrichtung nach einem der vorhergehenden Ansprüche und wenigstens einer der folgenden Merkmale:
(i) der Druckspeicher ist nur dem Phasensteller zugeordnet,
(ii) die Vorrichtung weist mehrere Phasenteller auf, und für jeden dieser Phasensteller ist jeweils ein eigener Druckspeicher vorgesehen,
(iii) die Vorrichtung weist mehrere Phasensteller auf, und der Druckspeicher ist für die mehreren Phasensteller gemeinsam vorgesehen.

16. Vorrichtung nach einem der vorhergehenden Ansprüche, ferner umfassend eine Vakuumpumpe (P) zur Versorgung eines Aggregats mit einem Unterdruck, wobei das Anbaugehäuse (G) auch für die Vakuumpumpe (P) vorgesehen ist.

17. Brennkraftmaschine umfassend:
a) eine Kurbelwelle,
b) eine Nockenwelle (1, 2)
c) und eine an der Brennkraftmaschine montierte Vorrichtung nach einem der vorhergehenden Ansprüche für die Verstellung der Phasenlage der Nockenwelle (1, 2) relativ zur Kurbelwelle und zur Versorgung eines Aggregats mit Unterdruck,
d) wobei das Anbaugehäuse (G) an einem Maschinengehäuse (4) der Brennkraftmaschine, vorzugsweise einem Zylinderkopf, montiert ist.

## Claims

1. A device for adjusting the phase position of a cam shaft (1, 2) of an internal combustion engine, said device comprising:
a) a phase setter (S), which can be adjusted using a pressure fluid, for adjusting the phase position of the cam shaft (1, 2) relative to a crankshaft of the internal combustion engine;
b) an attachment housing (G) which can be mounted on the internal combustion engine and forms a housing or at least a housing cover for the phase setter (S);
c) and a pressure storage (30) for the pressure fluid, for ensuring a sufficiently high setting speed of the phase setter (S);
d) wherein the attachment housing (G) forms a wall (18) of the pressure storage (30), **characterised in that**
e) the phase setter is supplied with the pressure fluid via a blocking means (22) which is arranged upstream of the phase setter and formed as a reflux valve, and
f) the blocking means (22) is arranged in the attachment housing (G).

2. The device according to the preceding claim, **characterised in that** the pressure storage (30) is configured, in terms of its chamber volume and spring tension, such that it is always ensured that the phase setter (S) performs at least one setting procedure at the high setting speed required.

3. The device according to any one of the preceding claims, **characterised in that** at least one of the following features is fulfilled:
(i) the blocking means (22) is arranged upstream of the pressure storage (30);
(ii) the blocking means (22) is provided for the phase setter (S) only or for the phase setter (S) and a vacuum pump (P) only;
(iii) a filter (21) is arranged in a pressure fluid supply for the phase setter (S), preferably in or on the attachment housing (G).

4. The device according to any one of the preceding claims, **characterised in that** the attachment housing (G) comprises an accommodating space (16) for a control means (V), for example an electrical control means, and as applicable an electrical motorised actuator for the phase setter (S).

5. The device according to any one of the preceding claims, **characterised in that** one or more conduit(s) (25, 26, 27) for a pressure fluid, electrical energy or signals extend within the attachment housing (G) or on the outside of the attachment housing (G).

6. The device according to any one of the preceding claims, **characterised in that** the phase setter (S) is supplied with the pressure fluid in accordance with a rotational speed of the internal combustion engine by means of a pump which is driven by the internal combustion engine, for example a lubricant pump for supplying the internal combustion engine with the pressure fluid formed by the lubricant.

7. The device according to the preceding claim, **characterised in that** the pressure storage (30) ensures that the phase setter (S) is supplied with a sufficient pressure and a sufficient amount of the pressure fluid, even under unfavourable conditions in which the pressure of the pressure fluid supply is subject to major fluctuations within the operating range of the internal combustion engine.

8. The device according to any one of the preceding claims, **characterised in that** the attachment housing (G) forms both one or more mounting point(s) for mounting on the internal combustion engine and at least one wall of the pressure storage, in one piece.

9. The device according to any one of the preceding claims and at least one of the following features:
(i) the attachment housing (G) mounts at least one component of the phase setter (S) or of a drive for the phase setter;
(ii) the phase setter (S) is formed as a fluidic pivoting motor.

10. The device according to any one of the preceding claims, **characterised in that** the pressure storage (30) comprises a pressure chamber (31) which is delineated by a wall structure (32) which can be moved against a restoring elasticity force and is supported by the attachment housing (G) or mounted such that it can move back and forth,
wherein at least one of the following features is fulfilled:
(i) a spring (33) which generates the elasticity force is supported on the attachment housing (G);
(ii) a piston forms the movable wall structure (32);
(iii) the movable wall structure is an elastically flexible but fluid-proof wall structure.

11. The device according to any one of the preceding claims and at least one of the following features:
(i) the phase setter (S) can be supplied with the pressure fluid via the cam shaft (1, 2) or another cam shaft (2, 1) of the internal combustion engine or an engine housing (4) of the internal combustion engine;
(ii) the attachment housing (G) for the pressure fluid comprises a fluid port (17) for connecting to a fluid feed in or on an engine housing (4) of the internal combustion engine;
(iii) the phase setter (S) can be supplied with the pressure fluid by the attachment housing (G);
(iv) at least one control conduit (25, 26) feeds through the attachment housing (G) in order to charge the phase setter (S) with the pressure fluid.

12. The device according to any one of the preceding claims, **characterised in that** the phase setter (S) comprises a first rotor (7) and a second rotor (8), and a rotational angular position which the rotors (7, 8) exhibit relative to each other can be adjusted, and **in that** a control means (V) for adjusting the rotational angular position is arranged in an accommodating space (16) of the attachment housing (G).

13. The device according to any one of the preceding claims, **characterised in that** the internal combustion engine comprises a first and a second cam shaft (1, 2), the phase setter (S) is provided for adjusting the phase position of the first cam shaft (1, 2), and the device comprises another phase setter (S) for adjusting the phase position of the second cam shaft (1, 2), wherein the attachment housing preferably also forms a housing or at least a housing cover for the other phase setter (S), and wherein the other phase setter (S) is preferably formed in accordance with at least one of the preceding claims.

14. The device according to any one of the preceding claims, comprising a detection means (D) for ascertaining the rotational angular position of the cam shaft (1, 2) to be adjusted, wherein at least one of the following features is preferably fulfilled:
(i) the detection means (D) is arranged in or on the attachment housing (G);
(ii) the detection means (D) comprises a rotational angle transmitter (35) and a sensor (36) for detecting the rotational angular position of the rotational angle transmitter (35), wherein the rotational angle transmitter is preferably arranged on a rotor (7, 8) of the phase setter (S), and the sensor (36) is preferably arranged in or on the attachment housing (G).

15. The device according to any one of the preceding claims and at least one of the following features:
(i) the pressure storage is preferably assigned to the phase setter only;
(ii) the device comprises a plurality of phase setters, and each of these phase setters is respectively provided with a pressure storage of its own;
(iii) the device comprises a plurality of phase setters, and the pressure storage is provided jointly for the plurality of phase setters.

16. The device according to any one of the preceding claims, further comprising a vacuum pump (P) for supplying an assembly with a partial vacuum, wherein the attachment housing (G) is also provided for the vacuum pump (P).

17. An internal combustion engine, comprising:
(i) a crankshaft;
(ii) a cam shaft (1, 2);
(iii) and a device according to any one of the preceding claims, mounted on the internal combustion engine, for adjusting the phase position of the cam shaft (1, 2) relative to the crankshaft and for supplying an assembly with a partial vacuum,
(iv) wherein the attachment housing (G) is mounted on an engine housing (4) of the internal combustion engine, preferably a cylinder head.

## Revendications

1. Dispositif pour régler la position de phase d'un arbre à cames (1, 2) d'un moteur à combustion interne, le dispositif comportant :
a) un déphaseur (S) réglable avec un fluide sous pression pour régler la position de phase de l'arbre à cames (1, 2) par rapport à un vilebrequin du moteur à combustion interne,
b) un carter de fixation (G) pouvant être monté sur le moteur à combustion interne, lequel carter de fixation forme un carter ou au moins un couvercle de carter pour le déphaseur (S),
c) et un accumulateur de pression (30) pour le fluide sous pression afin d'assurer une vitesse de réglage suffisamment grande du déphaseur (S),
d) dans lequel le carter de fixation (G) forme une paroi (18) de l'accumulateur de pression (30), **caractérisé en ce que**
e) le déphaseur est alimenté en fluide sous pression par des moyens de blocage (22) agencés en amont du déphaseur et formés comme un clapet anti-retour, et
f) les moyens de blocage (22) sont agencés dans le carter de fixation (G).

2. Dispositif selon la revendication précédente, **caractérisé en ce que** l'accumulateur de pression (30) est conçu de manière à garantir que, en fonction du volume de chambre et de la tension de ressort, le déphaseur (S) exécute au moins une opération de réglage avec la vitesse de réglage élevée requise.

3. Dispositif selon l'une des revendications précédentes, **caractérisé en ce qu'**au moins une des caractéristiques suivantes est satisfaite :
(i) les moyens de blocage (22) sont agencés en amont de l'accumulateur de pression (30),
(ii) les moyens de blocage (22) sont prévus uniquement pour le déphaseur (S) ou uniquement pour le déphaseur (S) et une pompe à vide (P),
(iii) dans une alimentation en fluide sous pression pour le déphaseur (S) est agencé un filtre (21), de préférence dans ou sur le carter de fixation (G).

4. Dispositif selon l'une des revendications précédentes, **caractérisé en ce que** le carter de fixation (G) comporte un espace de réception (16) pour des moyens de commande (V), par exemple des moyens de commande électriques, facultativement également un actionneur à moteur électrique pour le déphaseur (S).

5. Dispositif selon l'une des revendications précédentes, **caractérisé en ce qu'**une ou plusieurs conduites (25, 26, 27) pour un fluide sous pression, de l'énergie électrique ou des signaux s'étendent dans le carter de fixation (G) ou à l'extérieur sur le carter de fixation (G).

6. Dispositif selon l'une des revendications précédentes, **caractérisé en ce que** le déphaseur (G) est alimenté en fluide sous pression en fonction d'une vitesse de rotation du moteur à combustion interne au moyen d'une pompe entraînée par le moteur à combustion interne, de préférence une pompe de moyens de lubrification, pour alimenter le moteur à combustion interne avec le fluide sous pression formé par les moyens de lubrification.

7. Dispositif selon la revendication précédente, **caractérisé en ce que** l'accumulateur de pression (30) fait en sorte que le déphaseur (S) soit alimenté avec une pression suffisante et une quantité de fluide sous pression suffisante également dans des conditions défavorables, dans lesquelles la pression de l'alimentation en fluide sous pression est soumise à des fluctuations plus importantes dans la plage de fonctionnement du moteur à combustion interne.

8. Dispositif selon l'une des revendications précédentes, **caractérisé en ce que** le carter de fixation (G) en un seul bloc forme aussi bien un ou plusieurs bâtis de montage pour le montage sur le moteur à combustion interne qu'au moins une paroi de l'accumulateur de pression.

9. Dispositif selon l'une des revendications précédentes et ayant au moins une des caractéristiques suivantes :
(i) le carter de fixation (G) supporte au moins un composant du déphaseur (S) ou un entraînement pour le déphaseur,
(ii) le déphaseur (S) est formé comme un moteur oscillant fluidique.

10. Dispositif selon l'une des revendications précédentes, **caractérisé en ce que** l'accumulateur de pression (30) comporte une chambre de pression (31) délimitée par une structure de paroi (32) qui peut être déplacée contre une force élastique de rappel et est supportée par le carter de fixation (G) ou est montée de manière à pouvoir se déplacer en va-et-vient,
dans lequel au moins une des caractéristiques suivantes est satisfaite :
(i) un ressort (33) générant la force élastique est supporté par le carter de fixation (G),
(ii) un piston forme la structure de paroi mobile (32),
(iii) la structure de paroi mobile est une structure de paroi élastiquement souple mais étanche aux fluides.

11. Dispositif selon l'une des revendications précédentes et comportant au moins une des caractéristiques suivantes :
(i) le déphaseur (S) peut être alimenté en fluide sous pression par l'intermédiaire de l'arbre à cames (1, 2) ou d'un arbre à cames supplémentaire (2, 1) du moteur à combustion interne ou d'un carter de moteur (4) du moteur à combustion interne,
(ii) le carter de fixation (G) comporte un orifice de fluide (17) pour le fluide sous pression pour un raccordement à une alimentation en fluide dans ou sur un carter de moteur (4) du moteur à combustion interne,
(iii) le déphaseur (S) peut être alimenté en fluide sous pression à travers le carter de fixation (G),
(iv) au moins une conduite de commande (25, 26) passe à travers le carter de fixation (G) pour appliquer le fluide sous pression au déphaseur (S).

12. Dispositif selon l'une des revendications précédentes, **caractérisé en ce que** le déphaseur (G) comporte un premier rotor (7) et un second rotor (8) et une position d'angle de rotation, que les rotors (7, 8) prennent l'un par rapport à l'autre, peut être réglée, et **en ce que** des moyens de commande (V) sont agencés pour régler la position d'angle de rotation dans un espace de réception (16) du carter de fixation (G).

13. Dispositif selon l'une des revendications précédentes, **caractérisé en ce que** le moteur à combustion interne comporte un premier et un second arbres à cames (1, 2), le déphaseur (S) est prévu pour régler la position de phase du premier arbre à cames (1, 2), et le dispositif comporte un autre déphaseur (S) pour régler la position de phase du second arbre à cames (1, 2), dans lequel le carter de fixation forme de préférence également un carter ou au moins un couvercle de carter pour l'autre déphaseur (S), et dans lequel l'autre déphaseur (S) est formé de préférence selon au moins une des revendications précédentes.

14. Dispositif selon l'une des revendications précédentes, incluant un dispositif de détection (D) pour déterminer la position d'angle de rotation de l'arbre à cames (1, 2) à régler, dans lequel de préférence au moins une des caractéristiques suivantes est satisfaite :
(i) le dispositif de détection (D) est agencé dans ou sur le carter de fixation (G),
(ii) le dispositif de détection (D) inclut un codeur d'angle de rotation (35) et un capteur (36) pour détecter la position d'angle de rotation du codeur d'angle de rotation (35), dans lequel le codeur d'angle de rotation est agencé de préférence sur un rotor (7, 8) du déphaseur (S) et le capteur (36) est agencé de préférence dans ou sur le carter de fixation (G).

15. Dispositif selon l'une des revendications précédentes et ayant au moins une des caractéristiques suivantes :
(i) l'accumulateur de pression est uniquement couplé au déphaseur,
(ii) le dispositif comporte plusieurs déphaseurs et un accumulateur de pression spécifique est respectivement prévu pour chacun de ces déphaseurs,
(iii) le dispositif comporte plusieurs déphaseurs et l'accumulateur de pression est prévu pour la pluralité de déphaseurs combinés.

16. Dispositif selon l'une des revendications précédentes, comportant en outre une pompe à vide (P) pour alimenter un ensemble avec une pression négative, dans lequel le carter de montage (G) est également prévu pour la pompe à vide (P).

17. Moteur à combustion interne comportant :
a) un vilebrequin,
b) un arbre à cames (1, 2),
c) et un dispositif monté sur le moteur à combustion interne selon l'une des revendications précédentes pour régler la position de phase de l'arbre à cames (1, 2) par rapport au vilebrequin et pour alimenter un ensemble avec une pression négative,
d) dans lequel le carter de fixation (G) est monté sur un carter de moteur (4) du moteur à combustion interne, de préférence une tête de cylindre.
